(19) Europäisches Patentamt
European Patent Office
Office européen des brevets

(11) **EP 4 696 843 A1**

(12) **EUROPÄISCHE PATENTANMELDUNG**

(43) Veröffentlichungstag:
**18.02.2026 Patentblatt 2026/08**

(21) Anmeldenummer: **24216054.7**

(22) Anmeldetag: **28.11.2024**

(51) Internationale Patentklassifikation (IPC):
***E02F 9/22*** (2006.01)

(52) Gemeinsame Patentklassifikation (CPC):
**F16H 61/4157; B60W 30/09; E02F 9/2235;
E02F 9/2253; E02F 9/24; E02F 9/262; F16H 61/42;
F16H 61/47;** B60Y 2200/415; F16H 59/60

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **04.01.2024 DE 102024200059**

(71) Anmelder: **Robert Bosch GmbH
70442 Stuttgart (DE)**

(72) Erfinder:
• **Hense, Heinz
89231 Neu-Ulm (DE)**

• **Feig, Juergen
89346 Bibertal (DE)**
• **Klyne, Andreas
89081 Ulm (DE)**
• **Mittermayr, Thomas
4101 Feldkirchen an der Donau (AT)**
• **Artner, Maximilian
4063 Hörsching (AT)**
• **Glogger, Simon
89284 Pfaffenhofen (DE)**
• **Schmid, Marc
73345 Hohenstadt (DE)**
• **Vogel, Dieter
89160 Dornstadt (DE)**

(54) **VERFAHREN ZUR VERBESSERTEN KOLLISIONSVERMEIDUNG**

(57) Die Erfindung betrifft eine Mobile Arbeitsmaschine (1), die konfiguriert ist, Lasten aufzunehmen, wobei die mobile Arbeitsmaschine (1) einen hydrostatischen Antrieb umfasst, der für die Bewegung der mobilen Arbeitsmaschine (1) zuständig ist, wobei der hydrostatische Antrieb eine mit einer Antriebsmaschine koppelbare Hydropumpe umfasst, die konfiguriert ist, eine mit einem Abtrieb koppelbare zweite Hydromaschine (61) mit Druckmittel zu versorgen, wobei die mobile Arbeitsmaschine (1) mindestens einen Umfeldsensor (S1) umfasst, der konfiguriert ist Umfelddaten zu erfassen, wobei die mobile Arbeitsmaschine (1) eine erste und eine zweite Bremsfunktion umfasst, die jeweils konfiguriert sind, die mobile Arbeitsmaschine (1) mittels einer Änderung eines Schwenkwinkels der Hydropumpe und eines Schwenkwinkels des Hydromotors zu verzögern, wobei die zweite Bremsfunktion konfiguriert ist, dass diese aktiviert wird, nachdem in dem mobilen Arbeitsmaschine (1) festgestellt wurde, dass die mobile Arbeitsmaschine (1) verzögert werden soll, um eine Kollision zu vermeiden, wobei die erste Bremsfunktion ein erstes Bremsverhalten aufweist und wobei die zweite Bremsfunktion ein zweites Bremsverhalten aufweist, wobei das erste Bremsverhalten sich von dem zweiten Bremsverhalten unterscheidet.

Fig. 3

EP 4 696 843 A1

**Beschreibung**

Kollisionen zwischen mobilen Arbeitsmaschinen stellen eine ernsthafte Gefahr sowohl für die Menschen, die sie bedienen, als auch für die Maschinen selbst dar. Besonders in Situationen mit eingeschränkter Sicht, beispielsweise wenn ein Radlader mit einer beladenen Schaufel oder ein Dumper mit einer gefüllten Mulde unterwegs ist, besteht die Gefahr schwerwiegender Unfälle. Es gibt bereits bekannte Systeme, die darauf abzielen, solche Kollisionen zu vermeiden oder ihre Auswirkungen zu minimieren. Diese Systeme umfassen Rückfahrkameras, Bird-Eye-View-Kameras für eine verbesserte Rundumsicht und verschiedene Warn- und Vermeidungssysteme, die auf Kamera-, Ultraschall-, Radar- oder Lidar-Technologie basieren. Sie agieren als Assistenzsysteme, um die Sicherheit im Betrieb dieser Maschinen zu erhöhen.

Wenn es um Systeme geht, die auf Umfeldsensorik wie Radar basieren, erkennen die Sensoren Hindernisse wie Personen, andere Fahrzeuge oder Wände. Diese bekannten Systeme berechnen dann anhand der übermittelten Daten, wie Abstand und Relativgeschwindigkeit des erkannten Objekts, eine "time-to-collision" sowie einen kritischen Abstand, bei dessen Unterschreitung eine Warnung ausgegeben werden sollte - hierbei bleibt genug Zeit für den Fahrer, manuell zu bremsen. Ebenso wird ein Abstand ermittelt, bei dessen Unterschreitung ein automatischer Brems- oder Verzögerungseingriff ausgelöst werden soll.

Diese Systeme sind ein wichtiger Schritt, um die Sicherheit im Betrieb mobiler Arbeitsmaschinen zu verbessern und tragen dazu bei, Unfälle zu vermeiden oder zumindest ihre Schwere zu verringern.

In Systemen zur Kollisionsvermeidung mit aktivem Eingriff in den Fahrantrieb wird eine gezielte Verzögerung des Fahrzeugs eingeleitet, um sicherzustellen, dass das Fahrzeug vor dem erkannten Hindernis zum Stillstand kommt. Diese Verzögerung kann durch verschiedene Mechanismen realisiert werden, wie beispielsweise durch den Einsatz des hydrostatischen Fahrantriebs (durch das Verschwenken von Pumpe und/oder Motor) oder durch Anwendung der Betriebsbremse.

Wenn die Maschine mit einem konventionellen Fahrantrieb in Verbindung mit der Kollisionsvermeidungsfunktion betrieben wird, erfordert dies die Auswertung und Überwachung kritischer Objekte in einem weiten Bereich, da eine relativ lange Strecke gebraucht wird, bis wann die mobile Maschine zum Stillstand kommen wird. Dies führt zu einer erhöhten Erkennung von nicht kollisionsverursachenden Objekten (False-Positives-Rate), die sich zwar aufgrund des aktuellen Zustands der Maschine auf dem vorhergesagten Pfad befinden, sich jedoch tatsächlich nicht auf dem realen Pfad der Maschine befinden, da zukünftige Lenkbewegungen oder Richtungsänderungen nicht vorhergesagt werden können.

Die Verwendung einer höheren Maschinenverzögerung könnte zu einer Verringerung der Länge des überwachten Bereichs und damit zu einer Reduzierung der Wahrscheinlichkeit beitragen, auf ein Objekt zu reagieren, das sich zukünftig nicht auf dem tatsächlichen Pfad der Maschine befinden wird. Allerdings ist eine solche höhere Maschinenverzögerung besonders bei schweren Maschinen sehr schwierig, da hohe Reibungen notwendig sind. Daher ergeben sich zwei Teilprobleme, die gelöst werden müssen:

I. Sicherstellung einer höheren Maschinenverzögerung im Falle eines Brems- oder Verzögerungseingriffs auch bei schweren Maschinen;
II. Reduzierung des überwachten Bereichs zur Minimierung von nicht kollisionsverursachenden Objekten.

Die Hauptaufgabe besteht also darin, eine Lösung für die zwei beschriebenen Teilprobleme zu finden.

KURZFASSUNG

Gemäß einer Ausführungsform der vorliegenden Erfindung wird ein Verfahren zur Vermeidung einer Kollision einer mobilen Arbeitsmaschine mit einem externen Objekt (99) bereitgestellt, wobei die mobile Arbeitsmaschine einen hydrostatischen Antrieb umfasst, der für die Bewegung der mobilen Arbeitsmaschine zuständig ist, wobei der hydrostatische Antrieb eine mit einer Antriebsmaschine koppelbare Hydropumpe umfasst, die konfiguriert ist, einen mit einem Abtrieb koppelbaren Hydromotor mit Druckmittel zu versorgen, wobei die mobile Arbeitsmaschine mindestens einen ersten Umfeldsensor (S1) umfasst, der konfiguriert ist Umfelddaten zu erfassen, wobei die mobile Arbeitsmaschine eine erste Bremsfunktion umfasst, die konfiguriert ist, die mobile Arbeitsmaschine mittels einer Änderung eines Schwenkwinkels der Hydropumpe und des Hydromotors zu verzögern, falls eine Verzögerung der mobilen Arbeitsmaschine direkt oder indirekt erfordert wird, wobei das Verfahren folgende Schritte umfasst:

a. Ermittlung einer Relativposition zwischen der mobilen Maschine und dem Objekt (99) mittels des ersten Umfeldsensors;
b. Ermittlung einer Relativbewegung zwischen der mobilen Maschine und dem Objekt (99);
c. Feststellen auf Basis der Ermittlungen vom Schritt a. und b., dass die mobile Arbeitsmaschine verzögert werden soll, um eine Kollision mit dem externen Objekt (99) zu vermeiden;
d. Aktivieren einer zweiten Bremsfunktion, die konfiguriert ist, die mobile Arbeitsmaschine mittels einer Änderung des Schwenkwinkels der Hydropumpe und des Hydromotors zu verzögern, nachdem im Schritt c. festgestellt wurde, dass die mobile Arbeitsmaschine verzögert werden soll, um eine Kollision zu vermeiden;

e. Verzögern der mobilen Arbeitsmaschine unter Berücksichtigung der im Schritt d. aktivierten zweiten Bremsfunktion;

wobei die erste Bremsfunktion ein erstes Bremsverhalten aufweist und wobei die zweite Bremsfunktion ein zweites Bremsverhalten aufweist, wobei das erste Bremsverhalten sich von dem zweiten Bremsverhalten unterscheidet.

Es ist dem Fachmann Klar, dass in der vorliegenden Erfindung mit dem Wortlaut "Änderung eines Schwenkwinkels" das Wortlaut "Änderung eines Schwenkwinkels oder einer Größe, die von diesem abhängig ist" gemeint ist. Um unnötige länge Formulierungen zu vermeiden, wird daher einfach der Wortlaut "Änderung eines Schwenkwinkels" angewendet. Die Größe kann z.B. ein Verdrängungsvolumen des Hydromotors oder der Hydropumpe sein (=Schwenkwinkel*maximaler Hubvolumen).

KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:

Figur 1 zeigt einen Radlader als Beispiel für eine mobile Maschine;

Figur 2 zeigt eine schematische Darstellung einer mobilen Maschine mit Umfeldsensoren;

Figur 3 zeigt einen hydraulischen Schaltplan eines hydrostatischen Fahrantriebes gemäß dem Stand der Technik;

Figur 4 zeigt ein Sichtfeld eines Umfeldsensors gemäß dem Stand der Technik (links) und gemäß der vorliegenden Erfindung (Rechts);

Figur 5 zeigt ein Blockschaltbild für eine Kollisionsvermeidungsfunktion einer mobilen Maschine gemäß einer Ausführungsform der vorliegenden Erfindung;

Figur 6 zeigt eine erste Bremsfunktion (links) und eine zweite Bremsfunktion (rechts) gemäß einer Ausführungsform der vorliegenden Erfindung.

DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

Es wird darauf hingewiesen, dass in dem Verlauf der Beschreibung der vorliegenden Erfindung die Merkmale "Hydropumpe" und "Hydromotor" mit dem Merkmal "Hydromaschine" ersetzt werden, da dem Fachmann bekannt ist, dass in vielen Fällen (z.B. beim Verzögern) die Hydropumpe als Hydromotor funktioniert und der Hydromotor als Hydropumpe.

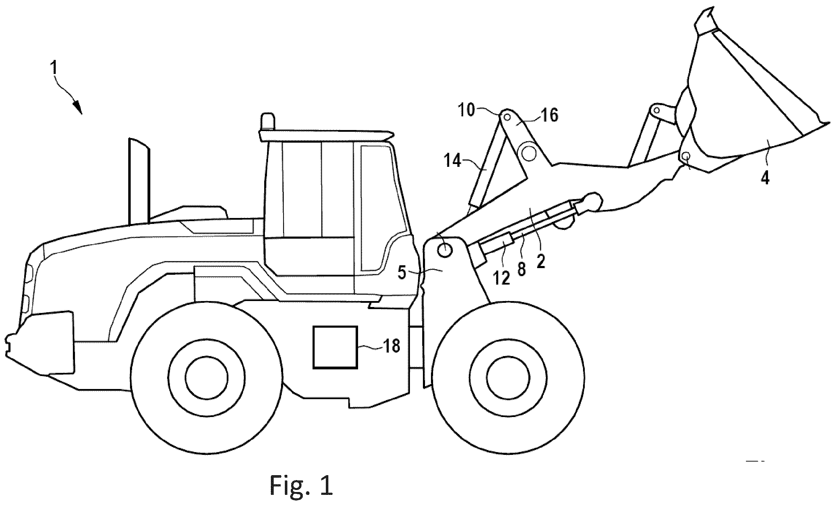

Figur 1 zeigt einen Radlader 1 als Beispiel für eine mobile Arbeitsmaschine. Darüber hinaus stellt der Radlader nur ein Beispiel einer mobilen Arbeitsmaschine dar. Es ist nicht notwendig, dass die mobile Arbeitsmaschine eine Arbeitskinematik, wie bei dem Radlader, umfasst. Wie in dem Verlauf klarer wird, ist für die vorliegende Erfindung besonders wichtig, dass ein hydrostatischer Fahrantrieb vorhanden ist. Ob auch eine Arbeitshydraulik vorhanden ist, ist für die vorliegende Erfindung grundsätzlich nicht relevant.

Der Radlader 1 weist einen Ausleger auf, der wiederum mehrere Auslegerelemente aufweist, um Lasten aufzunehmen. Die Auslegerelemente sind hier beispielhaft ein Hubarm 2 (auch als "Auslegerarm" bekannt) und eine Schaufel 4, die miteinander bzw. mit einem Auslegerträger 5 (z.B. Fahrgestell) des Radladers 1 mittels Achsen drehbar bzw. schwenkbar verbunden sind. Die Auslegerelemente 2, 4 sind mittels Aktuatoren 8, 10 bewegbar, d.h. die Dreh- bzw. Schwenkbewegung um die Achsen wird durch eine Bewegung der Aktuatoren bewirkt.

Es ist ein erster Aktuator 8 für den Hubarm 2 vorgesehen, der die Bewegung bzw. Drehung des Hubarms 2 relativ zum Auslegerträger 5 bewirkt. Ebenso ist ein zweiter Aktuator 10 für die Schaufel 4 vorgesehen, der die Schaufel 4 bewegt bzw. dreht (kippt). Die Aktuatoren umfassen insbesondere Hydraulikzylinder 12, 14, d.h. einen ersten Hydraulikzylinder 12 des ersten Aktuators 8 und einen zweiten Hydraulikzylinder 14 des zweiten Aktuators 10. Die Bewegung der Schaufel 4 wird über ein Gestänge 16 übertragen bzw. angelenkt, das als Komponente des Aktuators 10 der Schaufel 4 angesehen werden kann.

Die Aktuatoren 8, 10 können durch eine Steuerung 18 angesteuert werden, wobei im Falle von Hydraulikzylindern 12,14 Wegeventile vorgesehen sind, die den Fluss von Hydraulikflüssigkeit zu den Hydraulikzylindern steuern.

Die mobile Arbeitsmaschine 1 umfasst eine Mehrzahl von Rädern, die eine Bewegung der mobilen Arbeitsmaschine ermöglichen. Durch die Bewegung können Kollisionen zwischen der mobilen Arbeitsmaschine und externen Objekten (wie z.B. eine andere mobile Arbeitsmaschine oder ein Baum) entstehen. Solche Kollisionen stellen eine ernsthafte Gefahr sowohl für die Menschen, die sie bedienen, als auch für die Maschinen selbst dar. Um eine solche Gefahr zu vermeiden, werden generell Kollisionsvermeidungsfunktionen benutzt.

In einer solchen Funktion werden generell Umfeldsensoren (Radarsensoren, Ultraschallsensoren, Kameras und Lidar) ihre Umgebung erfassen und erkennen Hindernisse, andere Fahrzeuge oder Personen in der Nähe. Die erfassten Daten werden dann von einem Steuerungssystem analysiert, um potenzielle Kollisionen zu erkennen. Sobald potenzielle Kollisionsgefahren erkannt werden, kann die Maschine Warnungen oder Alarme auslösen. Diese können visuell über Bildschirme oder LED-Anzeigen, akustisch über Warntöne oder durch Vibrationen im Inneren des Fahrzeugs erfolgen, um den Fahrer oder die Bediener zu alarmieren. Fortgeschrittene Systeme können automatische Notbremsungen aktivieren oder die Geschwindigkeit reduzieren, um Kollisionen zu vermeiden. Diese Systeme können in der Lage sein, selbstständig zu handeln, um die Maschine zu stoppen oder zu verlangsamen, wenn die Gefahr einer Kollision besteht.

Einige mobile Maschinen sind mit Fahrerassistenzsystemen ausgestattet, die dem Fahrer dabei helfen, Kollisionen zu vermeiden. Diese Systeme können Lenkungsunterstützung, Spurhalteassistenten, adaptive Geschwindigkeitsregelung und andere Funktionen umfassen, um sicherzustellen, dass die Maschine sicher und ohne Kollisionen betrieben wird. Durch die Einrichtung von Zonen oder Bereichen, in denen die Maschine sicher arbeiten kann, und der Implementierung von Zonenerkennungssystemen kann die Maschine so programmiert werden, dass sie in bestimmten Bereichen bestimmte Aktionen ausführt oder ihre Geschwindigkeit anpasst.

Die genaue Implementierung dieser Maßnahmen hängt von der Art der Maschine, ihren Einsatzzwecken und den Sicherheitsstandards ab. Eine Kombination verschiedener Technologien und Systeme bietet in der Regel die zuverlässigste Kollisionsvermeidung für mobile Maschinen.

Es wird in dieser Beschreibung auf eine detaillierte Beschreibung einer Kollisionsvermeidungsfunktion verzichtet, da das Verfahren der vorliegenden Erfindung Anwendung bei einer beliebigen Kollisionsvermeidungsfunktion finden kann.

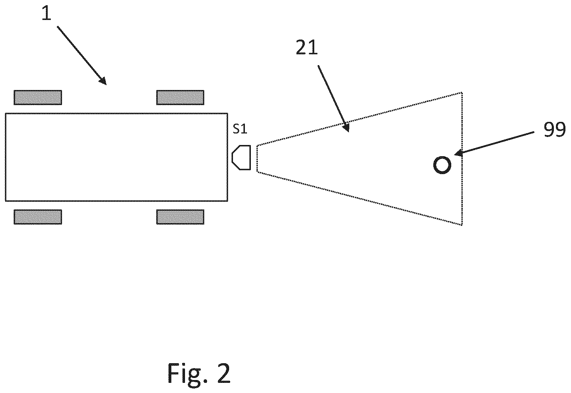

Aus diesem Grund umfasst die mobile Arbeitsmaschine (wie in Figur 2 dargestellt) einen ersten Umfeldsensor S1. Bekannte Arten von Umfeldsensoren sind z.B. Kamera-, Radar-, Ultraschall- oder Lidar-basierte Sensoren. Der Umfeldsensor S1 ist konfiguriert, Umfelddaten zu erfassen, sodass externe Objekte 99 innerhalb eines Sichtfeldes 21 erfasst werden können.

Um eine Fortbewegung der mobilen Arbeitsmaschine zu ermöglichen, wird in der Regel ein hydrostatischer Fahrantrieb benutzt.

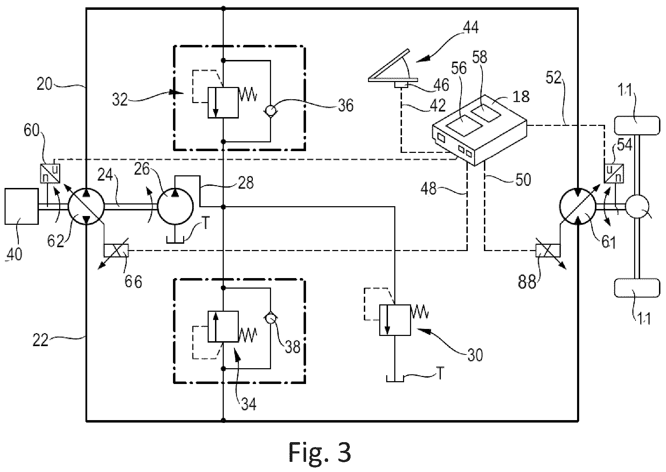

Gemäß Figur 3 hat ein hydrostatischer Fahrantrieb eine erste hydrostatische Hydromaschine 62, die in erster Linie als Hydropumpe betrieben wird und von einer Antriebsmaschine 40, die als Dieselmotor ausgestaltet werden kann (oder alternativ auch als elektrischer Motor), angetrieben wird. Des Weiteren hat der hydrostatische Fahrantrieb 1 eine zweite hydrostatische Hydromaschine 61, die über eine Triebwelle mit einer zwei Räder 11 aufweisenden Achse gekoppelt ist und in erster Linie als Hydromotor betrieben wird. Beide Hydromaschinen 61, 62 sind jeweils über eine Verstelleinheit 66, 88 in ihrem Verdrängungsvolumen verstellbar. Die erste Hydromaschine 62 ist über eine erste Zweigleitung 20, die in den weiteren Betrachtungen die Vorlaufleitung ist, über die Druckmittel von der Hydromaschine 62 zur Hydromaschine 61 fließt, und über eine zweite Zweigleitung 22, die in den weiteren Betrachtungen die zweite Zweigleitung ist, über die Druckmittel von der Hydromaschine 61 zur Hydromaschine 62 fließt, in einem geschlossenen hydraulischen Kreislauf fluidisch mit der zweiten Hydromaschine verbunden.

Der hydrostatische Fahrantrieb hat eine mit einer Triebwelle 24 der ersten Hydromaschine 2 verbundene Speisepumpe 26, die Druckmittel von einem Tank T in eine Speiseleitung 28 fördern kann. Letztgenannte verzweigt sich in drei Zweige, wobei ein erster Zweig über ein Druckbegrenzungsventil 30 mit dem Tank T in Druckmittelverbindung bringbar ist. Ein zweiter beziehungsweise dritter Zweig ist über ein Druckbegrenzungsventil 32 beziehungsweise ein Druckbegrenzungsventil 34, von denen jedes ein integriertes Nachsaugrückschlagventil 36 beziehungsweise 38 aufweist, mit der Zweigleitung 20 beziehungsweise mit der Zweigleitung 22 in Druckmittelverbindung bringbar.

Beide Hydromaschinen 61, 62 sind in allen vier Quadranten betreibbar, so dass sowohl die Strömungsrichtung des Druckmittels im geschlossenen hydraulischen Kreislauf als auch die Drehrichtung jeder der Hydromaschinen umkehrbar ist.

Der hydrostatische Fahrantrieb hat eine Steuereinheit 18, an die über eine Signalleitung 42 ein Fahrpedal 44 angeschlossen ist. Das Letztgenannte hat einen Sensor 46, über den eine Betätigungsstärke des Fahrpedals 44 erfassbar und über die Signalleitung 42 an die Steuereinheit 18 übermittelbar ist. Dies ist über eine elektrische Signalleitung 48 mit der Stellvorrichtung 66 der Hydromaschine 62 und über eine elektrische Signalleitung 50 mit der Stellvorrichtung 88 der Hydromaschine 61 verbunden. Über eine elektrische Signalleitung 52 ist eine Drehzahlerfassungseinheit 54, über die die Drehzahl der zweiten Hydromaschine 61 an der Triebwelle erfassbar ist, mit der Steuereinheit 18 verbunden. Über eine elektrische Signalleitung ist eine Drehzahlerfassungseinheit 60, über die die Drehzahl der ersten Hydromaschine 62 an deren Triebwelle erfassbar ist, mit der Steuereinheit 18 verbunden. Die Steuereinheit 18 hat eine Speichereinheit 56, in der ein erfindungsgemäßes Verfahren abgelegt ist, und eine Prozessoreinheit 58, in der das Verfahren ausführbar ist.

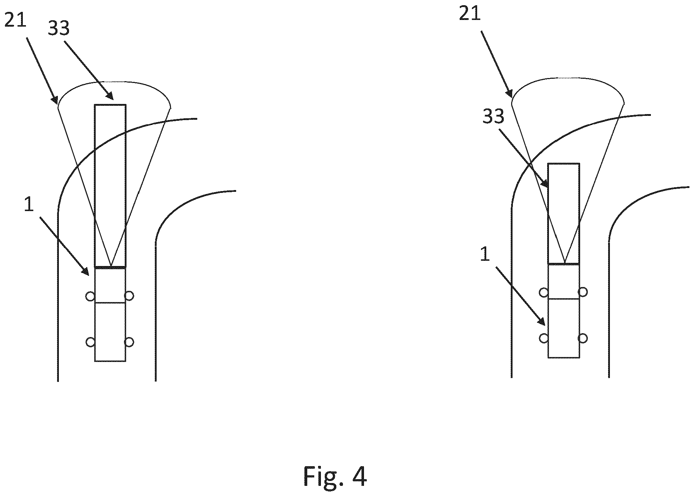

Figur 4 zeigt eine Auswahl 33 des Sichtfelds 21 des Umfeldsensors S1 gemäß dem Stand der Technik (links) und gemäß der vorliegenden Erfindung (Rechts). Insbesondere, wie klarer aus dem Verlauf der vorliegenden Beschreibung sein wird, wird nur ein Teil des Sichtfeldes 21 des Umfeldsensors ausgewählt, sodass nur externe Objekte 99, die sich innerhalb des ausgewählten Sichtfeldes befinden, bei der Kollisionsvermeidung berücksichtigt werden. Gemäß einer Ausführungsform der vorliegenden Erfindung wird eine Länge des ausgewählten Sichtfeldes festgestellt. Ein erster Anteil der Länge des Sichtfeldes wird mit dieser Formel festgestellt:

$$L_1 = \frac{v^2}{2a}$$

wobei $L_1$ der erste Anteil der Länge des ausgewählten Sichtfeldes ist, der von der möglichen Soll-Verzögerung der mobilen Arbeitsmaschine verursacht wird, wobei v die aktuelle Fahrgeschwindigkeit der mobilen Arbeitsmaschine ist und wobei a die Soll-Verzögerung der mobilen Arbeitsmaschine ist, die durch die Abbremsung des Hydromotors und der Hydropumpe erreicht werden kann. Um die komplette Länge des Sichtfeldes zu berechnen, soll vorzugsweise weiterhin ein Reaktionsweg und ein Sicherheitsabstand berücksichtigt werden. Insbesondere kann diese Formel benutzt werden,

$$L = L_1 + (v \cdot t) + d$$

wobei L die Länge des Sichtfeldes, $L_1$ die Länge des ersten Anteils, der bereits erklärt wurde, v die aktuelle Fahrgeschwindigkeit der mobilen Arbeitsmaschine, t eine Fahrer-Reaktionszeit und d ein Sicherheitsabstand sind.

Kern dieser Erfindung ist, dass eine höhere Verzögerung der mobilen Arbeitsmaschine durch den hydrostatischer Fahrantrieb erreicht wird. Durch diese höhere Verzögerung wird es möglich, das ausgewählte Sichtfeld zu verkleinern, sodass immer weniger externe Objekte berücksichtigt werden, die sich zwar aufgrund des aktuellen Zustands der Maschine auf dem vorhergesagten Pfad befinden, sich jedoch tatsächlich nicht auf dem realen Pfad der Maschine befinden, da zukünftige Lenkbewegungen oder Richtungsänderungen nicht vorhergesagt werden können.

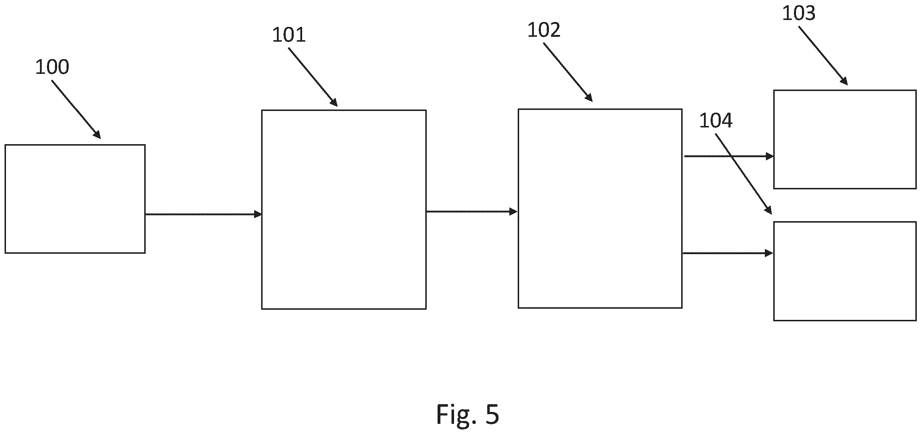

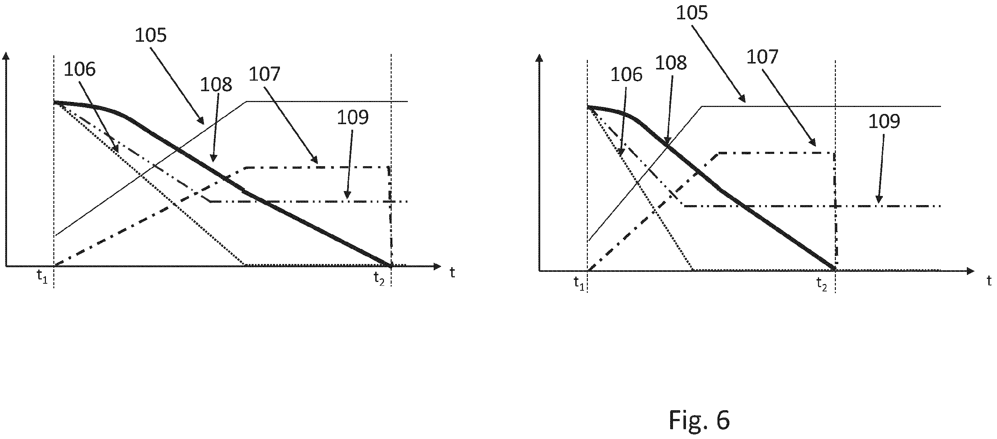

Mit Bezug auf die Figur 5 wird nun grob die Logik der vorliegenden Erfindung erläutert. Die genauen Funktionen werden allerdings mit Bezug auf Figur 6 erläutert.

In einem ersten Schritt 100 wird eine Relativposition zwischen der mobilen Maschine 1 und dem externen Objekt 99 mittels des ersten Umfeldsensors ermittelt. Wie schon erwähnt, soll sich das externe Objekt 99 vorzugsweise innerhalb des ausgewählten Sichtfeldes 33 des Sichtfeldes 21 des Umfeldsensors S1 befinden. In dem Schritt wird weiterhin eine Relativbewegung zwischen der mobilen Arbeitsmaschine 1 und dem externen Objekt 99 ermittelt, vorzugsweise unter Berücksichtigung der eigenen Bewegung der mobilen Arbeitsmaschine 1 und der ermittelten Umfeldsensordaten.

In einem weiteren Schritt 101 wird auf Basis der Ermittlungen vom Schritt 100 festgestellt, ob die mobile Arbeitsmaschine aktiv verzögert werden soll, um eine Kollision mit dem externen Objekt 99 zu vermeiden.

Nachdem im Schritt 101 festgestellt wurde, dass die mobile Arbeitsmaschine verzögert werden soll, um eine Kollision zu vermeiden, wird in einem weiteren Schritt 102 eine (zweite) Bremsfunktion der mobilen Arbeitsmaschine aktiviert. Die zweite Funktion hat zwei Subfunktionen. Die erste Subfunktion ist konfiguriert, die mobile Arbeitsmaschine mittels einer Änderung des Schwenkwinkels der Hydropumpe und des Hydromotors zu verzögern. Die zweite Subfunktion ist konfiguriert durch eine Senkung der Soll-Drehzahl der Antriebsmaschine 40 die mobile Arbeitsmaschine 1 abzubremsen.

Das bedeutet, dass in einem Sub-Schritt 103 die mobile Arbeitsmaschine unter Berücksichtigung der ersten Sub-Funktion verzögert wird, während in dem zweiten Sub-Schritt 104 die mobile Arbeitsmaschine unter Berücksichtigung der zweiten Sub-Funktion verzögert wird.

Figur 6 stellt eine erste Bremsfunktion (links) und die bereits beschriebene zweite Bremsfunktion (rechts) dar.

Die erste Bremsfunktion ist die Funktion, die im Normalfall benutzt wird, um die mobile Arbeitsmaschine zu verzögern, d.h. für den Fall, dass in dem Schritt 101 festgestellt wird, dass die mobile Arbeitsmaschine nicht aktiv verzögert werden soll, um eine Kollision mit dem externen Objekt 99 zu vermeiden. Die zweite Bremsfunktion ist die Funktion, die für den Fall benutzt werden soll, dass in dem Schritt 101 festgestellt wird, dass die mobile Arbeitsmaschine aktiv verzögert werden soll, um eine Kollision mit dem externen Objekt 99 zu vermeiden.

Sowohl bei der ersten Bremsfunktion (links) als auch bei der zweiten Bremsfunktion (rechts) werden die gleichen Größen dargestellt. Mit der Linie 105 wird ein Zeitverlauf des Soll-Schwenkwinkels des Hydromotors 61 dargestellt während mit der Linie 106 ein Zeitverlauf des Soll-Schwenkwinkels der Hydropumpe 62 dargestellt wird. Das bedeutet, dass die Linien 105 und 106 die erste Sub-Funktion des Schritts 103 darstellen. Mit der Linie 107 wird ein Zeitverlauf der Ist-Verzögerung der mobilen Arbeitsmaschine 1 dargestellt. Mit der Linie 108 wird dagegen ein Zeitverlauf der bereits beschrieben Ist-Fahrgeschwindigkeit v der mobilen Arbeitsmaschine 1 dargestellt, die sich auf Basis der Bremsfunktion ändert. Mit der Linie 109 wird die Soll-Drehzahl der Antriebsmaschine 40 dargestellt, die sich auf Basis der Bremsfunktion ändert.

Wie in Figur 6 dargestellt ist, wird ab dem Zeitpunkt t1 mit der Verzögerung der mobilen Arbeitsmaschine angefangen. Ab dem Zeit t2 soll die mobile Arbeitsmaschine eine Fahrgeschwindigkeit v gleich null erreicht haben.

Wie aus der Figur 6 klar ist, weist die erste Bremsfunktion ein erstes Bremsverhalten auf, während die zweite Bremsfunktion ein zweites Bremsverhalten aufweist, wobei sich das erste Bremsverhalten von dem zweiten Bremsverhalten unterscheidet. Der Grund dafür ist, dass eine Änderungsrate des Soll-Schwenkwinkels des Hydromotors und des Soll-Schwenkwinkels der Hydropumpe bei der ersten Bremsfunktion vorgesehen ist, die kleiner als eine Änderungsrate des Soll-Schwenkwinkels des Hydromotors und des Soll-Schwenkwinkels der Hydropumpe der zweiten Bremsfunktion ist, sodass die mobile Arbeitsmaschine mit der zweiten Bremsfunktion schneller abgebremst werden kann. Insbesondere wird ab dem Zeit t1 ein Schwenkwinkel der Hydropumpe 62 verkleinert, während der Schwenkwinkel des Hydromotors vergrößert wird.

Darüber hinaus, wie in Figur 6 dargestellt ist, wird die zweite Sub-Funktion der ersten Funktion (links) vorzugsweise ein unterschiedliches Verhalten im Vergleich zu der zweiten Sub-Funktion der zweiten Funktion (rechts) aufweisen. Der Grund dafür ist, dass die Änderungsrate der Soll-Drehzahl der Antriebsmaschine unterschiedlich ist: die Änderungsrate bei der zweiten Funktion ist höher im Vergleich zu der ersten Funktion (siehe Linie 109).

Die erste Bremsfunktion ist von den elektrohydraulischen Komponenten als auch der Parametrierung der Fahrantriebssoftware abhängig und entspricht dem Verzögerungsverhalten im normalen Fahrbetrieb. Aus Komfortgründen ist die Verzögerung so eingestellt, dass die maximal mögliche Dynamik nicht ausgenutzt wird. Dagegen wird vorzugsweise die zweite Bremsfunktion die komplette maximal mögliche Dynamik ausnutzen.

Die erste Bremsfunktion wird in der Regel für den Fall benutzt, dass der Fahrer eine aktive Verzögerung der mobilen Arbeitsmaschine anfordert oder für den Fall, dass das Fahrpedal 44 nicht mehr betätigt wird (das Loslassen des Fahrpedals 44). Das bedeutet, dass vorzugsweise die erste Bremsfunktion immer aktiv ist und eingreifen wird, sobald eine der beschriebenen Bedingungen (oder auch eine andere Bedingung) auftritt. Allerdings, sobald im Schritt 101 festgestellt wird, dass die mobile Arbeitsmaschine aktiv verzögert werden soll, um eine Kollision mit dem externen Objekt 99 zu vermeiden, wird die erste Funktion deaktiviert (oder generell in Stand-by gesetzt), solange die zweite Bremsfunktion aktiviert ist.

Es wird darauf hingewiesen, dass es nicht notwendig ist, dass die mobile Arbeitsmaschine die Fahrgeschwindigkeit v gleich null erreichen muss. Für viele Fälle kann es genug sein, dass die Kollisionsgefahr nicht mehr aktuell ist und automatisch die zweite Bremsfunktion in Standby gesetzt wird. Darüber hinaus es ist auch dem Fachmann klar, dass ein Loslassen des Fahrpedals 44 für die Aktivierung der ersten Bremsfunktion nicht notwendig ist: z.B. die Bremsanforderung (d.h. die Aktivierung der ersten Bremsfunktion) kann automatisch erstellt werden (z.B. durch eine Automatisierungsfunktion).

In einer Variante, um eine lastunabhängige Lösung zu erreichen, wird vorzugsweise die erhöhte Verzögerung durch die Hinzuschaltung eines Retarders erreicht.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Darüber hinaus wurden die Bereiche, auf denen Fachleute kundig sein dürften, hier nicht beschrieben, um die beschriebene Erfindung nicht unnötig zu verschleiern. Dementsprechend soll die Erfindung nicht durch die spezifischen veranschaulichenden Ausführungsformen beschränkt sein, sondern durch den Schutzbereich der beigefügten Ansprüche.

## Patentansprüche

1. Verfahren zur Vermeidung einer Kollision einer mobilen Arbeitsmaschine (1) mit einem externen Objekt (99), wobei die mobile Arbeitsmaschine (1) einen hydrostatischen Antrieb umfasst, der für die Bewegung der mobilen Arbeitsmaschine (1) zuständig ist, wobei der hydrostatische Antrieb eine mit einer Antriebsmaschine (40) koppelbare erste Hydromaschine (62) umfasst, die konfiguriert ist, eine mit einem Abtrieb koppelbare zweite Hydromaschine (61) mit Druckmittel zu versorgen, wobei die mobile Arbeitsmaschine (1) mindestens einen Umfeldsensor (S1) umfasst, der konfiguriert ist Umfelddaten zu erfassen, wobei die mobile Arbeitsmaschine (1) eine erste Bremsfunktion umfasst, die konfiguriert ist, die mobile Arbeitsmaschine (1) mittels einer Änderung eines Schwenkwinkels der ersten und der zweiten Hydromaschine (62, 61) zu verzögern, falls eine Verzögerung der mobilen Arbeitsmaschine (1) direkt oder indirekt erforderlich wird, wobei das Verfahren folgende Schritte umfasst:

   a. Ermittlung einer Relativposition zwischen der mobilen Arbeitsmaschine (1) und dem externen Objekt (99) mittels des ersten Umfeldsensors;
   b. Ermittlung einer Relativbewegung zwischen der mobilen Arbeitsmaschine (1) und dem externen Objekt (99);
   c. Feststellen auf Basis der Ermittlungen vom Schritt a. und b., dass die mobile Arbeitsmaschine (1) verzögert werden soll, um eine Kollision mit dem externen Objekt (99) zu vermeiden;

d. Aktivieren einer zweiten Bremsfunktion, die konfiguriert ist, die mobile Arbeitsmaschine (1) mittels einer Änderung des Schwenkwinkels der ersten und der zweiten Hydromaschine (62, 61) zu verzögern, nachdem im Schritt c. festgestellt wurde, dass die mobile Arbeitsmaschine (1) verzögert werden soll, um eine Kollision zu vermeiden;

e. Verzögern der mobilen Arbeitsmaschine (1) unter Berücksichtigung der im Schritt d. aktivierten zweiten Bremsfunktion;

wobei die erste Bremsfunktion ein erstes Bremsverhalten aufweist und wobei die zweite Bremsfunktion ein zweites Bremsverhalten aufweist, wobei das erste Bremsverhalten sich von dem zweiten Bremsverhalten unterscheidet.

2. Verfahren nach Anspruch 1, wobei bei der ersten Bremsfunktion eine Änderungsrate des Soll-Schwenkwinkels der ersten und der zweiten Hydromaschine vorgesehen ist, die kleiner als eine Änderungsrate der ersten und der zweiten Hydromaschine der zweiten Bremsfunktion ist, sodass die mobile Arbeitsmaschine (1) mit der zweiten Bremsfunktion schneller abgebremst werden kann.

3. Verfahren nach einem der Ansprüche 1 oder 2, wobei bei der Feststellung vom Schritt c., dass die mobile Arbeitsmaschine (1) verzögert werden soll, um eine Kollision mit dem externen Objekt (99) zu vermeiden, weiterhin das zweite Bremsverhalten berücksichtigt wird.

4. Verfahren nach Anspruch 3, wobei das zweite Bremsverhalten so berücksichtigt wird, dass auf Basis des zweiten Bremsverhaltens eine Portion (33) eines Sichtfeld (21) des Umfeldsensors (S1) ausgewählt wird und nur externe Objekte (99), die sich innerhalb des ausgewählten Sichtfelds (33) des Umfeldsensors (S1) befinden, mindestens in dem Schritt c. berücksichtigt werden.

5. Verfahren nach Anspruch 4, wobei mindestens ein erster Teil ($L_1$) der Länge des genannten ausgewählten Sichtfeldes (33) des Umfeldsensors (S1) proportional zu dem Quadrat der aktuellen Geschwindigkeit der mobilen Arbeitsmaschine (1) und umgekehrt proportional zu der Soll-Verzögerung der mobilen Arbeitsmaschine (1) ist, die mit der zweiten Bremsfunktion erreichbar ist.

6. Verfahren nach einem der Ansprüche 1 bis 5, wobei bei der zweiten Bremsfunktion der Schwenkwinkel der zweiten Hydromaschine (61) vergrößert wird, während der Schwenkwinkel der ersten Hydromaschine (62) verkleinert wird.

7. Verfahren nach einem der Ansprüche 1 bis 6, wobei bei der zweiten Bremsfunktion weiterhin eine Soll-Drehzahl der Antriebsmaschine (40) gesenkt wird.

8. Verfahren nach einem der Ansprüche 1 bis 7, wobei mit der Aktivierung der zweiten Bremsfunktion vom Schritt d. die erste Bremsfunktion abgeschaltet oder in Standby gesetzt wird.

9. Steuereinheit (18), die dazu eingerichtet ist, ein Verfahren nach einem der vorstehenden Ansprüche durchzuführen.

10. Mobile Arbeitsmaschine (1), die konfiguriert ist, Lasten aufzunehmen, wobei die mobile Arbeitsmaschine (1) einen hydrostatischen Antrieb umfasst, der für die Bewegung der mobilen Arbeitsmaschine (1) zuständig ist, wobei der hydrostatische Antrieb eine mit einer Antriebsmaschine koppelbare Hydropumpe umfasst, die konfiguriert ist, eine mit einem Abtrieb koppelbare zweite Hydromaschine (61), die Teil des hydrostatischen Antriebs ist, mit Druckmittel zu versorgen, wobei die mobile Arbeitsmaschine (1) mindestens einen Umfeldsensor (S1) umfasst, der konfiguriert ist Umfelddaten zu erfassen, wobei die mobile Arbeitsmaschine (1) eine erste und eine zweite Bremsfunktion umfasst, die jeweils konfiguriert sind, die mobile Arbeitsmaschine (1) mittels einer Änderung eines Schwenkwinkels der Hydropumpe und eines Schwenkwinkels des Hydromotors zu verzögern, wobei die zweite Bremsfunktion konfiguriert ist, dass diese aktiviert wird, nachdem in der mobilen Arbeitsmaschine (1) festgestellt wurde, dass die mobile Arbeitsmaschine (1) verzögert werden soll, um eine Kollision zu vermeiden, wobei die erste Bremsfunktion ein erstes Bremsverhalten aufweist und wobei die zweite Bremsfunktion ein zweites Bremsverhalten aufweist, wobei das erste Bremsverhalten sich von dem zweiten Bremsverhalten unterscheidet.

11. Computerprogramm, das eine Recheneinheit (18) veranlasst, ein Verfahren nach einem der Ansprüche 1 bis 9 durchzuführen, wenn es auf der Recheneinheit ausgeführt wird.

12. Maschinenlesbares Speichermedium (56) mit einem darauf gespeicherten Computerprogramm nach Anspruch 11.

Fig. 1

EP 4 696 843 A1

Fig. 2

Fig. 3

Fig. 4

EP 4 696 843 A1

Fig. 5

Fig. 6

Europäisches
Patentamt

European
Patent Office

Office européen
des brevets

**EUROPÄISCHER RECHERCHENBERICHT**

Nummer der Anmeldung

EP 24 21 6054

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 163 445 A1 (KOMATSU MFG CO LTD [JP]) 12. April 2023 (2023-04-12) | 1-3,6,7, 10 | INV. E02F9/22 |
| A | * Absätze [0034], [0036], [0042], [0043], [0056]; Abbildungen 1,2 * ----- | 4,5,8,9, 11,12 | |

RECHERCHIERTE SACHGEBIETE (IPC)

E02F

Der vorliegende Recherchenbericht wurde für alle Patentansprüche erstellt

| Recherchenort | Abschlußdatum der Recherche | Prüfer |
|---|---|---|
| München | 17. Dezember 2025 | Dreyer, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................

& : Mitglied der gleichen Patentfamilie, übereinstimmendes Dokument

EPO FORM 1503 03.82 (P04C03)

**EP 4 696 843 A1**

**ANHANG ZUM EUROPÄISCHEN RECHERCHENBERICHT
ÜBER DIE EUROPÄISCHE PATENTANMELDUNG NR.**          EP 24 21 6054

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2025

| Im Recherchenbericht angeführtes Patentdokument | Datum der Veröffentlichung | Mitglied(er) der Patentfamilie | | Datum der Veröffentlichung |
|---|---|---|---|---|
| EP 4163445 A1 | 12-04-2023 | CN | 115803497 A | 14-03-2023 |
| | | EP | 4163445 A1 | 12-04-2023 |
| | | JP | 7527168 B2 | 02-08-2024 |
| | | JP | 2022056120 A | 08-04-2022 |
| | | US | 2023279642 A1 | 07-09-2023 |
| | | WO | 2022070579 A1 | 07-04-2022 |

EPO FORM P0461

Für nähere Einzelheiten zu diesem Anhang : siehe Amtsblatt des Europäischen Patentamts, Nr.12/82

**15**